# EUROPÄISCHE PATENTSCHRIFT

(11) **EP 2 272 305 B1**
(45) Veröffentlichungstag und Bekanntmachung des Hinweises auf die Patenterteilung: **06.06.2012**
(21) Anmeldenummer: 08736476.6
(22) Anmeldetag: 23.04.2008
(51) Int. Cl.: H05B 37/02

(54) **LICHTSTEUERSYSTEM UND VERFAHREN ZUM BETREIBEN EINES LICHTSTEUERSYSTEMS**
LIGHTING CONTROL SYSTEM AND METHOD FOR OPERATING A LIGHTING CONTROL SYSTEM
SYSTÈME DE COMMANDE DE LUMIÈRE ET PROCÉDÉ DE FONCTIONNEMENT D'UN SYSTÈME DE COMMANDE DE LUMIÈRE

(43) Veröffentlichungstag der Anmeldung: 12.01.2011
(73) Patentinhaber: OSRAM AG, 81543 München (DE)
(72) Erfinder: SCHLEICHER, Gotthard, 83379 Wonneberg (DE)
(86) Internationale Anmeldenummer: PCT/EP2008/054891
(87) Internationale Veröffentlichungsnummer: WO 2009/129849

(56) Entgegenhaltungen:
- WO-A-2005/096677
- DE-A1-102006 020 122
- US-A1- 2004 217 718
- US-A1- 2006 202 851

## Beschreibung

### Technisches Gebiet

Die Erfindung betrifft ein Lichtsteuersystem mit wenigstens zwei Leuchten, einem mit den wenigstens zwei Leuchten mittels einer Kommunikationsstrecke gekoppelten Steuergerät, mittels welchem eine jeweilige Beleuchtungsstärke der wenigstens zwei Leuchten veränderbar ist, und mit wenigstens zwei Sensoren, wobei jeder der wenigstens zwei Leuchten mindestens ein Sensor zugeordnet ist. Hierbei weisen die wenigstens zwei Sensoren eine erste Empfindlichkeit auf, bei welcher durch Beaufschlagen des Sensors mit einer von dem Sensor erfassbaren ersten Größe ein erstes Signal erzeugbar ist, in Abhängigkeit von welchem die jeweilige Beleuchtungsstärke einstellbar ist. Die wenigstens zwei Sensoren sind dazu ausgelegt, jeweils eine Adresse zu generieren, wobei die generierte Adresse des jeweils adressierten Sensors von dem Steuergerät ermittelbar ist.

### Stand der Technik

Ein gattungsgemäßes Lichtsteuersystem ist bekannt. Hierbei kann das Steuergerät die wenigstens zwei Sensoren mittels eines Rundrufbefehls (Broadcast-Verfahren) auffordern, eine Adresse zu generieren. Mittels eines Suchalgorithmus können von dem Steuergerät die in dem Lichtsteuersystem vorhandenen, generierten Adressen der adressierten Sensoren aufgefunden werden. Zum Lokalisieren der adressierten Sensoren werden diese vom Steuergerät dazu veranlasst, sich bemerkbar zu machen. Hierfür weist der jeweilige Sensor eine Blinkleuchte auf. Der blinkende Sensor wird dann von einer Bedienperson gesucht, um diesen zu lokalisieren und in dem Steuergerät den Anbringungsort des Sensors festzuhalten.

Ein solches Lichtsteuersystem ist aus der VS 2004/0217718 bekannt. Als nachteilig bei einem derartigen Lichtsteuersystem ist der Umstand anzusehen, dass das Suchen der sich bemerkbar machenden Sensoren und damit das Lokalisieren des Sensors bei groß dimensionierten Lichtsteuersystemen sehr langwierig sein kann. Zudem ist an dem Sensor eine Signalisierungseinrichtung, etwa die Blinkleuchte, vorzusehen.

Gemäß einem alternativen, aus dem Stand der Technik bekannten Verfahren, kann zum Generieren der Adresse des Sensors jedem Sensor ein spezifisches Widerstandselement zugeordnet sein, wobei durch Betätigen eines Schalters der Widerstandswert des Widerstandselements von einer Recheneinheit des Sensors als Adresse interpretiert wird. Die jeweilige Adresse der Sensoren kann also dadurch generiert werden, dass an dem jeweiligen Sensor der Schalter betätigt wird. Die generierte Adresse ist von dem Sensor dem Steuergerät übermittelbar. Das Suchen des die jeweilige Adresse generierenden Sensors entfällt für die Bedienperson, jedoch ist das Betätigen des Schalters an dem installierten Sensor für die Bedienperson mühevoll, insbesondere bei schlecht zugänglichen Anbringungsorten.

Gemäß einem alternativen, aus dem Stand der Technik bekannten Verfahren zum Unterscheiden von Sensoren kann in einem Lichtsteuersystem vorgesehen sein, dass jeder der wenigstens zwei Sensoren mittels einer spezifischen Anschlussleitung mit dem Steuergerät verbunden ist. Auf diese Weise ist jeder der wenigstens zwei Sensoren über die Anschlussleitung unterscheidbar beziehungsweise mittels des Steuergeräts selektierbar. Das Vorsehen sensorspezifischer Anschlussleitungen bringt jedoch einen vergleichsweise hohen Aufwand beim Installieren der Sensoren mit sich.

### Darstellung der Erfindung

Die Aufgabe der vorliegenden Erfindung ist es, ein Lichtsteuersystem der eingangs genannten Art zu schaffen, mittels welchem ein vereinfachtes Lokalisieren der wenigstens zwei Sensoren ermöglicht ist.

Diese Aufgabe wird durch ein Lichtsteuersystem mit den Merkmalen des Patentanspruchs 1 und durch ein Verfahren zum Betreiben eines Lichtsteuersystems mit den Merkmalen des Patentanspruchs 16 gelöst.

Vorteilhafte Ausgestaltungen mit zweckmäßigen Weiterbildungen der Erfindung sind in den jeweils abhängigen Patentansprüchen angegeben.

Bei dem gattungsgemäßen Lichtsteuersystem ist vorgesehen, dass die wenigstens zwei Sensoren dazu ausgelegt sind, eine zweite Empfindlichkeit aufzuweisen, wobei der jeweils adressierte Sensor dazu ausgelegt ist, bei einem Beaufschlagtwerden des diese zweite Empfindlichkeit aufweisenden Sensors mit einer von dem Sensor erfassbaren zweiten Größe ein von dem Steuergerät erfassbares zweites Signal zu erzeugen.

Durch Einstellen der zweiten Empfindlichkeit des Sensors kann dieser also in einen Zustand versetzt werden, in welchem sich dieser gegenüber dem Steuergerät infolge des Beaufschlagtwerdens mit der von dem Sensor erfassbaren zweiten Größe bemerkbar machen kann. Auf das Vorsehen einer Signalisierungseinrichtung an dem Sensor kann verzichtet werden, wodurch der Sensor einfacher aufgebaut ausgebildet werden kann. Die Bedienperson muss den sich bemerkbar machenden Sensor nicht suchen, wodurch das Lokalisieren der wenigstens zwei Sensoren vereinfacht und besonders rasch und rationell durchführbar ist.

Des Weiteren kann auf eine sensorspezifische Adressiereinrichtung in Form des aus dem Stand der Technik bekannten schaltbaren Widerstandselements oder in Form der sensorspezifischen Anschlussleitung verzichtet werden. Dadurch ist ein Aufwand beim Betätigen des Schalters bzw. beim Installieren des Lichtsteuersystems verringert.

Ist der eine zweite Empfindlichkeit aufweisende Sensor als optischer Sensor ausgebildet, so kann in vorteilhafter Weise in Abhängigkeit von einem jeweiligen Einfallen von Tageslicht in einen von der Leuchte beleuchteten Raum ein Einstellen der jeweiligen Empfindlichkeit erfolgen. Bei vergleichsweise hohem Tageslichteinfall kann der optische Sensor so eine vergleichsweise geringe Empfindlichkeit aufweisen und dennoch das erste Signal ausreichend deutlich erzeugen, in Abhängigkeit von welchem die jeweilige Beleuchtungsstärke der dem Sensor zugeordneten Leuchte einstellbar ist. Umgekehrt kann bei vergleichsweise niedrigem Tageslichteinfall der optische Sensor eine vergleichsweise hohe Empfindlichkeit aufweisen und so das erste Signal ausreichend deutlich erzeugen.

Ist die zweite Empfindlichkeit des Sensors größer als die erste Empfindlichkeit des Sensors, so kann nach dem Einstellen der erhöhten Empfindlichkeit des Sensors beispielsweise die Umgebung des optischen Sensors verdunkelt werden. In diesem Zustand des optischen Sensors ist ein besonders schwacher Lichtreiz zum Erzeugen des zweiten Signals des Sensors ausreichend.

In einer vorteilhaften Ausgestaltung der Erfindung ist die zweite Empfindlichkeit des Sensors geringer als die erste Empfindlichkeit des Sensors. Hierbei kann die zweite Empfindlichkeit etwa des optischen Sensors gegenüber der ersten Empfindlichkeit so verringert sein, dass der Sensor auch bei vergleichsweise hellen Umgebungsbedingungen kein oder nur ein sehr schwaches Signal erzeugt. In diesem Zustand verringerter Empfindlichkeit ist nun ein Erzeugen eines Signals des Sensors durch einen gegenüber der Umgebungshelligkeit besonders starken Lichtreiz ermöglicht. Auf ein gegebenenfalls aufwendiges Verdunkeln der Umgebung des optischen Sensors kann verzichtet werden.

In vorteilhafter Weise ist die zweite Empfindlichkeit des Sensors mittels des Steuergeräts einstellbar. Das Einstellen der Empfindlichkeit, welches leitungsgebunden und/oder kabellos erfolgen kann, ist dadurch etwa gegenüber einem manuellen Einstellen erleichtert. Ebenso ist es vorstellbar, dass der als optischer Sensor ausgebildete Sensor die jeweilige Empfindlichkeit in Abhängigkeit vom Unterschreiten bzw. Überschreiten eines vorgebbaren Wertes der Helligkeit des einfallenden Tageslichts selbsttätig einstellt.

Als weiter vorteilhaft hat es sich gezeigt, wenn das Lichtsteuersystem ein Initialisierungsmittel umfasst, wobei der jeweils adressierte Sensors dazu ausgelegt ist, mit dem Initialisierungsmittel derart zusammenzuwirken, dass der die zweite Empfindlichkeit aufweisende Sensor das von dem Steuergerät erfassbare zweite Signal erzeugt, wenn der jeweils adressierte Sensors mittels des Initialisierungsmittels mit der von dem Sensor erfassbaren zweiten Größe beaufschlagt wird. Ist, wie bei optischen Sensoren, die vom Sensor erfassbare Größe Licht, so kann als Initialisierungsmittel eine starke Lichtquelle, beispielsweise eine Taschenlampe, ein Laserpointer oder dergleichen zum Beaufschlagen des Sensors mit Licht herangezogen werden. Lediglich der mittels des Initialisierungsmittels beaufschlagte Sensor erzeugt somit das zweite Signal, welches dem Steuergerät übermittelt wird.

Das Beaufschlagen des Sensors mit der von dem Sensor erfassbaren Größe kann dadurch besonders flexibel, über eine mit einer Reichweite des Initialisierungsmittels korrespondierende Distanz hinweg und gemäß einer von der Bedienperson gewünschten Logistik erfolgen. Die mit der von dem Sensor erfassbaren zweiten Größe beaufschlagten Sensoren können hierbei von der das Initialisierungsmittel handhabenden Bedienperson besonders einfach ausgewählt werden.

In vorteilhafter Weise ist das Steuergerät dazu ausgelegt, demjenigen der wenigstens zwei Sensoren eine Betriebsadresse zuzuteilen, welcher das aus dem Beaufschlagen mittels des Initialisierungsmittels resultierende zweite Signal erzeugt. Als Betriebsadressen können, insbesondere wenn das Lichtsteuersystem nach dem so genannten DALI-Standard (Digital Adressable Lighting Interface, digital adressierbare Beleuchtungsschnittstelle) arbeitet, Kurzadressen zugeteilt werden, welche ein besonders rasches Ansprechen der Sensoren ermöglichen. Nach dem DALI-Standard sind die Kurzadressen 6 Bit lang. Darüber hinaus kann ein Sensor mit einer oder mehreren diesem Sensor zugeordneten Leuchten bei Verwenden von Betriebsadressen zu einer Gruppe zusammengefasst werden.

Des Weiteren hat es sich als vorteilhaft gezeigt, wenn das Initialisierungsmittel dazu ausgelegt ist, demjenigen der wenigstens zwei Sensoren eine Betriebsadresse zuzuteilen, welcher mittels des Initialisierungsmittels mit der von dem Sensor erfassbaren zweiten Größe beaufschlagt wird. Dadurch kann das Zuteilen der Betriebsadresse beim Beaufschlagen des Sensors mit der von dem Sensor erfassbaren Größe besonders flexibel , über die mit der Reichweite des Initialisierungsmittels korrespondierende Distanz hinweg und gemäß der von der Bedienperson gewünschten Logistik erfolgen.

In einer weiteren vorteilhaften Ausgestaltung der Erfindung sind die wenigstens zwei Sensoren dazu ausgelegt, die jeweils eine Adresse, welche von dem Steuergerät ermittelbar ist, als Zufallsadresse zu generieren. Beim Generieren von Zufallsadressen, insbesondere bei Zufallsadressen, welche nach dem DALI-Standard 24 Bit lang sind, ist besonders sicher dafür gesorgt, dass jeder Sensor eine eindeutige Adresse generiert.

Des Weiteren hat es sich als vorteilhaft gezeigt, wenn wenigstens zwei Sensoren dazu ausgelegt ist, ein Adressiertsein zu kommunizieren. Beispielsweise kann der Sensor kommunizieren, dass ihm bereits eine Adresse zugewiesen wurde und im Rahmen einer laufenden Inbetriebnahme des Lichtsteuersystems ein erneutes Adressieren nicht möglich ist. Alternativ kann mittels des Sensors eine Frage kommuniziert werden, ob ein erneutes Adressieren des Sensors mit einer neuen Adresse erwünscht ist. Das Lichtsteuersystem ist dadurch besonders flexibel, da ein weiterer Sensor auch nachträglich einfach in das Lichtsteuersystem integrierbar ist.

In einer vorteilhaften Ausgestaltung der Erfindung ist das Steuergerät dazu ausgelegt, eine dem Sensor zuordenbare, insbesondere grafische und/oder textliche Rauminformation zu speichern. Nach dem Lokalisieren des Sensors durch die Bedienperson, kann die Bedienperson also die Rauminformation, welche über den Anbringungsort des Sensors Aufschluss gibt, in das Steuergerät eingeben. Die grafische Rauminformation kann hierbei einen Lageplan umfassen, die textliche Rauminformation eine textliche Beschreibung des Anbringungsortes des Sensors. Dadurch ist ermöglicht, dass das Steuergerät den Anbringungsort des Sensors, also den Ort der Signalerzeugung, zur Adresse des Sensors, insbesondere zu seiner Betriebsadresse, zuordnet.

In weiter vorteilhafter Weise weist das Lichtsteuersystem eine, insbesondere grafische, Benutzungsschnittstelle auf, welche dazu ausgelegt ist, eine dem Sensor und/oder der Leuchte zuordenbare Information zu kommunizieren. Dadurch kann eine Funktionalität des Lichtsteuersystems einfach veranschaulicht, insbesondere visualisiert, werden. Beispielsweise kann kommuniziert werden, welche Sensoren aktuell ein Signal erzeugen und/oder ein wie starkes Signal von dem Sensor erzeugt wird. Ebenso kann eine aktuell vorliegende Beleuchtungsstärke der Leuchte kommuniziert werden.

Von Vorteil ist es weiterhin, wenn die dem Sensor und/oder der Leuchte zuordenbare Information eine, insbesondere grafische und/oder textliche Rauminformation umfasst. Dadurch kann der Anbringungsort des Sensors und/oder der Leuchte einem Benutzer des Lichtsteuersystems, etwa der Bedienperson, kommuniziert werden.

In vorteilhafter Weise sind die wenigstens zwei Sensoren parallel geschaltet. Dadurch ist ein Installationsaufwand zum Installieren der Sensoren besonders gering und es sind vielfältige Topologien beim Anbringen der Sensoren ermöglicht. Des Weiteren sind dem Lichtsteuersystem so besonders einfach nachträglich weitere Sensoren hinzuzufügen. Daneben ist für das Lichtsteuersystem ein Steuergerät verwendbar, welches nur einen Eingang zum Anschließen von Sensoren aufweist, wobei dennoch ein Selektieren des einzelnen adressierten Sensors ermöglicht ist.

In einer weiteren vorteilhafte Ausgestaltung der Erfindung umfassen die wenigstens zwei Sensoren einen optischen Sensor und/oder einen Anwesenheitssensor. Der Anwesenheitssensor kann als passiver Sensor ausgebildet sein, welcher etwa eine Infrarotstrahlung der Umgebung erfasst und/oder als aktiver Sensor, welcher Ultraschall und/oder elektromagnetische Wellen aussenden und empfangen kann. Ebenso kann der Anwesenheitssensor einen optischen Sensor aufweisen, welcher beispielsweise zum Initialisieren des Sensors mittels des Initialisierungsmittels mit Licht beaufschlagt werden kann.

Dadurch ist ein Einstellen von konstanten Lichtwerten in einem von der Leuchte beleuchteten Raum in Abhängigkeit etwa vom Einfallen von Tageslicht in den Raum ermöglicht. Des Weiteren ist ein besonders sparsames Betrieben des Lichtsteuersystems ermöglicht, wenn die Leuchte lediglich dann betrieben wird, wenn der Anwesenheitssensor eine Anwesenheit einer Person in dem Raum meldet.

Des Weiteren hat es sich als vorteilhaft gezeigt, wenn der einer Leuchte zugeordnete Sensor in die Leuchte integriert ausgebildet ist. Dadurch kann beim Verkabeln der Leuchte der Sensor auf besonders einfache Art und Weise mitverkabelt werden.

Sofern das Lichtsteuersystem, welches ein individuelles Ansteuern von Betriebgeräten der Leuchten, beispielsweise elektronischen Vorschaltgeräten, mittels des Steuergeräts ermöglicht, nach dem DALI-Standard arbeitet, kann zum Verkabeln der Leuchten ein fünfadriges Kabel anstelle eines üblichen dreiadrigen Kabels verwendet werden. Hierbei empfiehlt es sich, die beiden freien Adern für DALI zu verwenden und die Sensoren wie die Betriebsgeräte der Leuchten an die DALI-Leitung anzuschließen.

Schließlich kann das Lichtsteuersystem in ein Gebäude-Management-System integriert sein, in welchem die wenigstens zwei Sensoren einen Temperatursensor und/oder einen Luftfeuchtesensor und/oder einen Luftgütesensor umfassen. Beim Integrieren des Lichtsteuersystems in das Gebäude-Management-System können mit den optischen Sensoren und/oder Anwesenheitssensoren mitverkabelte Temperatursensoren, Luftfeuchtesensoren und/oder Luftgütesensoren zum sparsamen und effizienten Betreiben des Gebäude-Management-Systems herangezogen werden. Hierbei werden beispielsweise von den Temperatursensoren, Luftfeuchtesensoren und/oder Luftgütesensoren gelieferte Informationen zum etwa Betreiben von Klimatisierungseinrichtungen genutzt. Das Generieren der Adressen der Temperatursensoren, Luftfeuchtesensoren und/oder Luftgütesensoren sowie das Zuteilen von Betriebsadressen erfolgt hierbei analog dem für die optischen Sensoren und/oder Anwesenheitssensoren beschriebenen Verfahren.

Die für das erfindungsgemäße Lichtsteuersystem beschriebenen bevorzugten Ausführungsformen und Vorteile gelten auch für das erfindungsgemäße Verfahren zum Betreiben eines Lichtsteuersystems.

### Kurze Beschreibung der Zeichnung

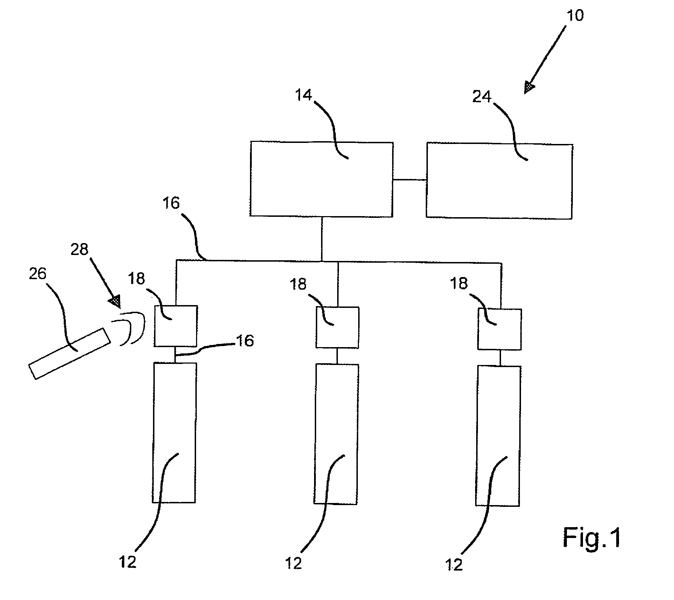

Im Folgenden wird die Erfindung anhand von Ausführungsbeispielen näher erläutert. Fig. 1 zeigt einen schematisierten Aufbau eines Leuchten und Sensoren umfassenden Lichtsteuersystems.

### Bevorzugte Ausführung der Erfindung

Fig. 1 zeigt schematisch ein Lichtsteuersystem 10, bei welchem drei Leuchten 12 an ein Steuergerät 14 angeschlossen sind. Mittels des Steuergeräts 14 ist eine jeweilige Beleuchtungsstärke jeder einzelnen der drei Leuchten 12 separat veränderbar. Die Leuchten 12 sind mit dem Steuergerät 14 mittels einer Kommunikationsstrecke gekoppelt, welche vorliegend als Steuerleitung 16 ausgebildet ist. In einer alternativen Ausführungsform des Lichtsteuersystems 10 kann die Kommunikationsstrecke ein leitungsungebundenes, also kabelloses Ansprechen der Leuchten 12 ermöglichen.

Ein Übermitteln von Steuerbefehlen des Steuergeräts 14 zu den einzelnen Leuchten 12 erfolgt vorzugsweise gemäß dem sogenannten DALI-Standard (Digital Adressable Lighting Interface, digital adressierbare Beleuchtungsschnittstelle), mittels welchem ein Einschalten und Ausschalten der Leuchten 12 sowie ein Dimmen der Leuchten 12 ermöglicht ist.

Das Lichtsteuersystem 10 umfasst des Weiteren drei Sensoren 18, wobei jeder Leuchte 12 ein Sensor 18 zugeordnet ist. Jeder der drei Sensoren 18 ist vorliegend seriell zu der jeweiligen Leuchte 12 geschaltet und mittels der Kommunikationsstrecke 16 mit dem Steuergerät 14 gekoppelt. Es können in alternativen Ausführungsformen auch Sensoren 18 und Leuchten 12 parallel geschaltet sein.

Die Sensoren 18 sind vorliegend als optische Sensoren ausgebildet, wobei ein Erfassungsbereich des Sensors 18 nicht vom Licht der Leuchte 12 direkt beeinflusst wird. Der Sensor 18 registriert also eine Summe von reflektiertem Tageslicht und durch die Leuchte 12 erzeugtem Licht. Je nach einfallendem Tageslicht kann somit die Beleuchtungsstärke der Leuchte 12 verringert werden.

Das Steuergerät 14 fordert die Sensoren 18 mittels eines Rundrufbefehls, also in einem Broadcast-Verfahren auf, gemäß dem DALI-Standard jeweils eine Zufallsadresse von vierundzwanzig Bit Länge zu generieren. Anschließend ermittelt das Steuergerät 14 mittels eines Suchalgorithmus die in dem Lichtsteuersystem vorhandenen Zufallsadressen der Sensoren 18.

Zum Lokalisieren der Sensoren 18 wird eine Empfindlichkeit der die Zufallsadresse aufweisenden Sensoren 18 mittels des Steuergeräts 14 verringert. Die optischen Sensoren 18 werden also so unempfindlich eingestellt, dass Sensoren 18 auch bei vergleichsweise hoher Beleuchtungsstärke der Leuchten 12 und bei Einfall von Tageslicht kein Signal erzeugen.

Eine Bedienperson kann daraufhin mittels eines Initialisierungsmittels 26, welches beispielsweise als stark fokussierte Taschenlampe, Laserpointer oder dergleichen ausgebildet ist, den optischen Sensor 18 gezielt mit starkem Licht beaufschlagen. Das Beaufschlagen der Sensoren 18 mit Licht als einer von dem Sensor 18 erfassbaren Größe ist in Fig. 1 durch Symbole 28 veranschaulicht.

Selbstverständlich können die Sensoren 18 ergänzend oder alternativ als Anwesenheitssensoren ausgebildet sein. Sind die Sensoren 18 alternativ als Infrarotstrahlung erfassende Anwesenheitssensoren ausgebildet, so können die Sensoren 18 gezielt mit einer starken Infrarotstrahlung beaufschlagt werden, welche durch das Initialisierungsmittel 26 bereitstellbar ist.

Durch das Beaufschlagtwerden des die Zufallsadresse aufweisenden optischen Sensors 18, dessen Empfindlichkeit verringert wurde, mit dem starken Licht des Initialisierungsmittels 26 erzeugt der Sensor 18 ein Signal, welches von dem Steuergerät 14 erfasst wird.

Somit ist Sensor 18 durch Beaufschlagen mit Licht des Initialisierungsmittels 26 von der Bedienperson lokalisiert. Es können der Reihe nach die optischen Sensoren 18 mittels des Initialisierungsmittels 26 mit dem starken Licht beaufschlagt und dadurch selektiert werden. Mittels des Initialisierungsmittels 26 ist also von der Bedienperson jeder der Sensoren 18 gezielt und entsprechend einer von der Bedienperson beim Initialisieren der Sensoren 18 gewählten Logistik lokalisierbar.

Eine den lokalisierten Sensor 18 kennzeichnende Rauminformation, etwa der Anbringungsort des Sensors 18 wird darauf hin von der Bedienperson in dem Steuergerät 14 abgespeichert. Dem lokalisierten Sensor 18 zudem eine vorliegend als Kurzadresse von sechs Bit Länge nach dem DALI-Standard ausgebildete Betriebsadresse zugeteilt. Das Zuteilen der Betriebsadresse zu dem Sensor 18 kann durch das Steuergerät 14 erfolgen oder von der Bedienperson vorgenommen werden.

Das Steuergerät 14 weist vorliegend eine grafische Benutzungsschnittstelle 24 auf, mittels welcher den Sensor 18 und die Leuchte 12 betreffende Informationen der Bedienperson angezeigt werden können.

Ist einer der Sensoren 18 bereits adressiert, und wird er bei verringerter Empfindlichkeit mittels des Initialisierungsmittels 26 mit der von dem Sensor 18 erfassbaren Größe beaufschlagt, so kann über die grafische Benutzungsschnittstelle 24 angezeigt werden, dass der Sensor 18 bereits adressiert ist.

Der Sensor 18 kann so ausgelegt sein, dass ein erneutes Adressieren ermöglicht ist oder dass der Sensor 18 lediglich, bevorzugt über die grafische Benutzungsschnittstelle 24, kommuniziert, dass bereits ein Adressieren des Sensors 18 erfolgt ist.

Des Weiteren kann die grafische Benutzungsschnittstelle 24 in das Steuergerät 14 integriert ausgebildet sein. Mittels der grafischen Benutzungsschnittstelle 24 können auf besonders anschauliche Weise Funktionalitäten der Leuchten 12 und der Sensoren 18 durch Anzeigen der Bedienperson und/oder einem weiteren Nutzer des Lichtsteuersystems 10 kommuniziert werden.

## Patentansprüche

1. Lichtsteuersystem mit
- wenigstens zwei Leuchten (12),
- einem mit den wenigstens zwei Leuchten (12) mittels einer Kommunikationsstrecke (16) gekoppelten Steuergerät (14), mittels welchem eine jeweilige Beleuchtungsstärke der wenigstens zwei Leuchten (12) veränderbar ist, und mit
- wenigstens zwei Sensoren (18), wobei jeder der wenigstens zwei Leuchten (12) mindestens ein Sensor (18) zugeordnet ist,
wobei die wenigstens zwei Sensoren (18) eine erste Empfindlichkeit aufweisen, bei welcher durch Beaufschlagen des Sensors (18) mit einer von dem Sensor (18) erfassbaren ersten Größe ein erstes Signal erzeugbar ist, in Abhängigkeit von welchem die jeweilige Beleuchtungsstärke einstellbar ist, und wobei die wenigstens zwei Sensoren (18) dazu ausgelegt sind, jeweils eine Adresse zu generieren, wobei die generierte Adresse des jeweils adressierten Sensors von dem Steuergerät (14) ermittelbar ist, **dadurch gekennzeichnet, dass** die wenigstens zwei Sensoren (18) dazu ausgelegt sind, eine zweite Empfindlichkeit aufzuweisen, wobei der jeweils adressierte Sensor (18) dazu ausgelegt ist, bei einem Beaufschlagtwerden des diese zweite Empfindlichkeit aufweisenden Sensors (18) mit einer von dem Sensor (18) erfassbaren zweiten Größe ein von dem Steuergerät (14) erfassbares zweites Signal zu erzeugen.

2. Lichtsteuersystem nach Anspruch 1, **dadurch gekennzeichnet, dass** die zweite Empfindlichkeit des Sensors (18) geringer ist als die erste Empfindlichkeit des Sensors (18).

3. Lichtsteuersystem nach Anspruch 1 oder 2, **dadurch gekennzeichnet, dass** die zweite Empfindlichkeit des Sensors (18) mittels des Steuergeräts (14) einstellbar ist.

4. Lichtsteuersystem nach einem der Ansprüche 1 bis 3, **dadurch gekennzeichnet, dass** das Lichtsteuersystem ein Initialisierungsmittel (26) umfasst, wobei der jeweils adressierte Sensors (18) dazu ausgelegt ist, mit dem Initialisierungsmittel (26) derart zusammenzuwirken, dass der die zweite Empfindlichkeit aufweisende Sensor (18) das von dem Steuergerät (14) erfassbare zweite Signal erzeugt, wenn der jeweils adressierte Sensors (18) mittels des Initialisierungsmittels (26) mit der von dem Sensor (18) erfassbaren zweiten Größe beaufschlagt wird.

5. Lichtsteuersystem nach Anspruch 4, **dadurch gekennzeichnet, dass** das Steuergerät (14) dazu ausgelegt ist, demjenigen der wenigstens zwei Sensoren (18) eine Betriebsadresse zuzuteilen, welcher das aus dem Beaufschlagen mittels des Initialisierungsmittels (26) resultierende zweite Signal erzeugt.

6. Lichtsteuersystem nach Anspruch 4 oder 5, **dadurch gekennzeichnet, dass** das Initialisierungsmittel (26) dazu ausgelegt ist, demjenigen der wenigstens zwei Sensoren (18) eine Betriebsadresse zuzuteilen, welcher mittels des Initialisierungsmittels (26) mit der von dem Sensor (18) erfassbaren zweiten Größe beaufschlagt wird.

7. Lichtsteuersystem nach einem der Ansprüche 1 bis 6, **dadurch gekennzeichnet, dass** die wenigstens zwei Sensoren (18) dazu ausgelegt sind, die jeweils eine Adresse, welche von dem Steuergerät (14) ermittelbar ist, als Zufallsadresse zu generieren.

8. Lichtsteuersystem nach einem der Ansprüche 1 bis 7, **dadurch gekennzeichnet, dass** die wenigstens zwei Sensoren (18) dazu ausgelegt sind, ein Adressiertsein zu kommunizieren.

9. Lichtsteuersystem nach einem der Ansprüche 1 bis 8, **dadurch gekennzeichnet, dass** das Steuergerät (14) dazu ausgelegt ist, eine dem Sensor (18) zuordenbare, insbesondere grafische und/oder textliche, Rauminformation zu speichern.

10. Lichtsteuersystem nach einem der Ansprüche 1 bis 9, **dadurch gekennzeichnet, dass** das Lichtsteuersystem eine, insbesondere grafische, Benutzungsschnittstelle (24) aufweist, welche dazu ausgelegt ist, eine dem Sensor (18) und/oder der Leuchte (12) zuordenbare Information zu kommunizieren.

11. Lichtsteuersystem nach Anspruch 10, **dadurch gekennzeichnet, dass** die dem Sensor (18) und/oder der Leuchte (12) zuordenbare Information eine, insbesondere grafische und/oder textliche, Rauminformation umfasst.

12. Lichtsteuersystem nach einem der Ansprüche 1 bis 11, **dadurch gekennzeichnet, dass** die wenigstens zwei Sensoren (18) parallel geschaltet sind.

13. Lichtsteuersystem nach einem der Ansprüche 1 bis 12, **dadurch gekennzeichnet, dass** die wenigstens zwei Sensoren einen optischen Sensor (18) und/oder einen Anwesenheitssensor umfassen.

14. Lichtsteuersystem nach einem der Ansprüche 1 bis 13, **dadurch gekennzeichnet, dass** der einer Leuchte (12) zugeordnete Sensor (18) in die Leuchte (12) integriert ausgebildet ist.

15. Lichtsteuersystem nach einem der Ansprüche 1 bis 14, **dadurch gekennzeichnet, dass** das Lichtsteuersystem (10) in ein Gebäude-Management-System integriert ist, in welchem die wenigstens zwei Sensoren (18) einen Temperatursensor und/oder einen Luftfeuchtesensor und/oder einen Luftgütesensor umfassen.

16. Verfahren zum Betreiben eines Lichtsteuersystems (10) mit
- wenigstens zwei Leuchten (12),
- einem mit den wenigstens zwei Leuchten (12) mittels einer Kommunikationsstrecke (16) gekoppelten Steuergerät (14), mittels welchem eine jeweilige Beleuchtungsstärke der wenigstens zwei Leuchten (12) veränderbar ist, und mit
- wenigstens zwei Sensoren (18), wobei jeder der wenigstens zwei Leuchten (12) mindestens ein Sensor (18) zugeordnet ist,
wobei die wenigstens zwei Sensoren (18) eine erste Empfindlichkeit aufweisen, bei welcher durch Beaufschlagen des Sensors (18) mit einer von dem Sensor (18) erfassbaren ersten Größe ein erstes Signal erzeugbar ist, in Abhängigkeit von welchem die jeweilige Beleuchtungsstärke einstellbar ist, bei welchem die wenigstens zwei Sensoren (18) jeweils eine Adresse generieren, und bei welchem die generierte Adresse des jeweils adressierten Sensors von dem Steuergerät (14) ermittelt wird, **dadurch gekennzeichnet, dass** eine zweite Empfindlichkeit der wenigstens zwei Sensoren (18) eingestellt wird, wobei der jeweils adressierte Sensors (18) bei einem Beaufschlagtwerden des diese zweite Empfindlichkeit aufweisenden Sensors (18) mit einer von dem Sensor (18) erfassbaren zweiten Größe ein von dem Steuergerät (14) erfassbares zweites Signal erzeugt.

## Claims

1. Lighting control system comprising
- at least two luminaires (12),
- a control unit (14) coupled to the at least two luminaires (12) by means of a communication link (16), by means of which control unit a respective illuminance of the at least two luminaires (12) can be varied, and comprising
- at least two sensors (18), wherein each of the at least two luminaires (12) is assigned at least one sensor (18),
wherein the at least two sensors (18) have a first sensitivity at which a first signal can be generated as a result of the sensor (18) being acted upon by a first parameter detectable by the sensor (18), and the respective illuminance can be set in a manner dependent on said first signal, and wherein the at least two sensors (18) are designed in each case to generate an address, wherein the generated address of the respectively addressed sensor can be determined by the control unit (14), **characterized in that** the at least two sensors (18) are designed to have a second sensitivity, wherein the respectively addressed sensor (18) is designed to generate a second signal, which is detectable by the control unit (14), when the sensor (18) having said second sensitivity is acted upon by a second parameter detectable by the sensor (18).

2. Lighting control system according to Claim 1, **characterized in that** the second sensitivity of the sensor (18) is lower than the first sensitivity of the sensor (18).

3. Lighting control system according to Claim 1 or 2, **characterized in that** the second sensitivity of the sensor (18) can be set by means of the control unit (14).

4. Lighting control system according to any of Claims 1 to 3, **characterized in that** the lighting control system comprises an initialization means (26), wherein the respectively addressed sensor (18) is designed to interact with the initialization means (26) in such a way that the sensor (18) having the second sensitivity generates the second signal detectable by the control unit (14) if the respectively addressed sensor (18) is acted upon by the second parameter detectable by the sensor (18) by means of the initialization means (26).

5. Lighting control system according to Claim 4, **characterized in that** the control unit (14) is designed to allocate an operating address to that one of the at least two sensors (18) which generates the second signal resulting from being acted upon by means of the initialization means (26).

6. Lighting control system according to Claim 4 or 5, **characterized in that** the initialization means (26) is designed to allocate an operating address to that one of the at least two sensors (18) which is acted upon by the second parameter detectable by the sensor (18) by means of the initialization means (26).

7. Lighting control system according to any of Claims 1 to 6, **characterized in that** the at least two sensors (18) are designed to generate the in each case one address, which can be determined by the control unit (14), as a random address.

8. Lighting control system according to any of Claims 1 to 7, **characterized in that** the at least two sensors (18) are designed to communicate an addressed state.

9. Lighting control system according to any of Claims 1 to 8, **characterized in that** the control unit (14) is designed to store spatial information which can be assigned to the sensor (18), in particular graphical and/or textual spatial information.

10. Lighting control system according to any of Claims 1 to 9, **characterized in that** the lighting control system has a, in particular graphical, user interface (24), which is designed to communicate information which can be assigned to the sensor (18) and/or to the luminaire (12).

11. Lighting control system according to Claim 10, **characterized in that** the information which can be assigned to the sensor (18) and/or to the luminaire (12) comprises spatial information, in particular graphical and/or textual spatial information.

12. Lighting control system according to any of Claims 1 to 11, **characterized in that** the at least two sensors (18) are connected in parallel.

13. Lighting control system according to any of Claims 1 to 12, **characterized in that** the at least two sensors comprise an optical sensor (18) and/or a presence sensor.

14. Lighting control system according to any of Claims 1 to 13, **characterized in that** the sensor (18) assigned to a luminaire (12) is embodied such that it is integrated into the luminaire (12).

15. Lighting control system according to any of Claims 1 to 14, **characterized in that** the lighting control system (10) is integrated into a building management system in which the at least two sensors (18) comprise a temperature sensor and/or an air humidity sensor and/or an air quality sensor.

16. Method for operating a lighting control system (10) comprising
- at least two luminaires (12),
- a control unit (14) coupled to the at least two luminaires (12) by means of a communication link (16), by means of which control unit a respective illuminance of the at least two luminaires (12) can be varied, and comprising
- at least two sensors (18), wherein each of the at least two luminaires (12) is assigned at least one sensor (18),
wherein the at least two sensors (18) have a first sensitivity at which a first signal can be generated as a result of the sensor (18) being acted upon by a first parameter detectable by the sensor (18), and the respective illuminance can be set in a manner dependent on said first signal, wherein the at least two sensors (18) in each case generate an address, and wherein the generated address of the respectively addressed sensor is determined by the control unit (14), **characterized in that** a second sensitivity of the at least two sensors (18) is set, wherein the respectively addressed sensor (18) generates a second signal, which is detectable by the control unit (14), when the sensor (18) having said second sensitivity is acted upon by a second parameter detectable by the sensor (18).

## Revendications

1. Système de commande de lumière comportant :
- au moins deux lampes (12) ;
- un appareil de commande (14) couplé aux au moins deux lampes (12) au moyen d'un trajet de communication (16) et permettant de modifier une intensité lumineuse respective des au moins deux lampes (12) ; et
- au moins deux capteurs (18), au moins un capteur (18)
étant associé à chacune des au moins deux lampes (12), les au moins deux capteurs (18) présentant une première sensibilité à laquelle peut être généré, du fait d'une exposition du capteur (18) à une première grandeur pouvant être détectée par le capteur (18), un premier signal en fonction duquel l'intensité lumineuse respective peut être réglée, et les au moins deux capteurs (18) étant conçus pour générer respectivement une adresse, l'adresse générée du capteur respectivement adressé pouvant être déterminée par l'appareil de commande (14), **caractérisé en ce que** les au moins deux capteurs (18) sont conçus pour présenter une deuxième sensibilité, le capteur (18) respectivement adressé étant conçu pour générer un deuxième signal qui peut être détecté par l'appareil de commande (14) lors d'une exposition du capteur (18) qui présente cette deuxième sensibilité à une deuxième grandeur pouvant être détectée par le capteur (18).

2. Système de commande de lumière selon la revendication 1, **caractérisé en ce que** la deuxième sensibilité du capteur (18) est inférieure à la première sensibilité du capteur (18).

3. Système de commande de lumière selon la revendication 1 ou 2, **caractérisé en ce que** la deuxième sensibilité du capteur (18) peut être réglée au moyen de l'appareil de commande (14).

4. Système de commande de lumière selon l'une des revendications 1 à 3, **caractérisé en ce que** le système de commande de lumière comprend un moyen d'initialisation (26), le capteur respectivement adressé (18) étant conçu pour coopérer de manière telle avec le moyen d'initialisation (26) que le capteur (18) qui présente la deuxième sensibilité génère le deuxième signal pouvant être détecté par l'appareil de commande (14) lorsque le capteur (18) respectivement adressé est exposé à la deuxième grandeur qui peut être détectée par le capteur (18), par le biais du moyen d'initialisation (26).

5. Système de commande de lumière selon la revendication 4, **caractérisé en ce que** l'appareil de commande (14) est conçu pour affecter une adresse de service à celui des au moins deux capteurs (18) qui génère le deuxième signal résultant de l'exposition par le biais du moyen d'initialisation (26).

6. Système de commande de lumière selon la revendication 4 ou 5, **caractérisé en ce que** le moyen d'initialisation (26) est conçu pour affecter une adresse de service à celui des au moins deux capteurs (18) qui est exposé, par le biais du moyen d'initialisation (26), par la deuxième grandeur pouvant être détectée par le capteur (18).

7. Système de commande de lumière selon l'une des revendications 1 à 6, **caractérisé en ce que** les au moins deux capteurs (18) sont conçus pour générer, en tant qu'adresse aléatoire, la respectivement une adresse qui peut être détectée par l'appareil de commande (14).

8. Système de commande de lumière selon l'une des revendications 1 à 7, **caractérisé en ce que** les au moins deux capteurs (18) sont conçus pour communiquer un état adressé.

9. Système de commande de lumière selon l'une des revendications 1 à 8, **caractérisé en ce que** l'appareil de commande (14) est conçu pour stocker une information spatiale, notamment graphique et/ou textuelle, qui peut être associée au capteur (18).

10. Système de commande de lumière selon l'une des revendications 1 à 9, **caractérisé en ce que** le système de commande de lumière comporte une interface d'utilisation (24), notamment graphique, laquelle est conçue pour communiquer une information qui peut être associée au capteur (18) et/ou à la lampe (12).

11. Système de commande de lumière selon la revendication 10, **caractérisé en ce que** l'information qui peut être associée au capteur (18) et/ou à la lampe (12) comprend une information spatiale, notamment graphique et/ou textuelle.

12. Système de commande de lumière selon l'une des revendications 1 à 11, **caractérisé en ce que** les au moins deux capteurs (18) sont montés en parallèle.

13. Système de commande de lumière selon l'une des revendications 1 à 12, **caractérisé en ce que** les au moins deux capteurs comprennent un capteur optique (18) et/ou un capteur de présence.

14. Système de commande de lumière selon l'une des revendications 1 à 13, **caractérisé en ce que** le capteur (18) associé à une lampe (12) est réalisé de manière intégrée à la lampe (12).

15. Système de commande de lumière selon l'une des revendications 1 à 14, **caractérisé en ce que** le système de commande de lumière (10) est intégré à un système de gestion de bâtiment dans lequel les au moins deux capteurs (18) comprennent un capteur de température et/ou un capteur d'humidité de l'air et/ou un capteur de la qualité de l'air.

16. Procédé pour faire fonctionner un système de commande de lumière (10), comportant :
- au moins deux lampes (12) ;
- un appareil de commande (14) couplé aux au moins deux lampes (12) au moyen d'un trajet de communication (16) et permettant de modifier une intensité lumineuse respective des au moins deux lampes (12) ; et
- au moins deux capteurs (18), au moins un capteur (18)
étant associé à chacune des au moins deux lampes (12), les au moins deux capteurs (18) présentant une première sensibilité à laquelle peut être généré, du fait d'une exposition du capteur (18) à une première grandeur pouvant être détectée par le capteur (18), un premier signal en fonction duquel l'intensité lumineuse respective peut être réglée, étant donné lequel les au moins deux capteurs (18) génèrent respectivement une adresse et étant donné lequel l'adresse générée du capteur respectivement adressé est déterminée par l'appareil de commande (14), **caractérisé en ce qu'**une deuxième sensibilité des au moins deux capteurs (18) subit un réglage, le capteur (18) respectivement adressé générant un deuxième signal qui peut être détecté par l'appareil de commande (14) lors d'une exposition du capteur (18) qui présente cette deuxième sensibilité à une deuxième grandeur pouvant être détectée par le capteur (18).
